# FASCICULE DE BREVET EUROPEEN

(11) **EP 1 690 791 B1**
(45) Date de publication et mention de la délivrance du brevet: **01.05.2013**
(21) Numéro de dépôt: 06290236.6
(22) Date de dépôt: 10.02.2006
(51) Int. Cl.: B65B 9/04, B65B 7/01, B29C 51/18

(54) **Procédé et installation pour le thermoformage de récipients**
Verfahren und Vorrichtung zum Thermoformen von Behältern
Method and apparatus for thermoforming of containers

(30) Priorité: 11.02.2005 FR 0501393
(43) Date de publication de la demande: 16.08.2006
(73) Titulaire: ERCA, 91940 Les Ulis (FR)
(72) Inventeur: Gandon, Bernard Claude, 78730 Saint-Arnoult en Yvelines (FR); Dunan, Alain Roger, 91450 Etiolles (FR)
(74) Mandataire: Intès, Didier Gérard André

(56) Documents cités:
- DE-A1- 19 804 876
- FR-A- 1 505 854
- US-A- 4 364 255
- STOVER C: "MASCHINENTECHNISCHE ENTWICKLUNGEN BEIM WARMFORMEN DEVELOPMENT IN THERMOFORMING MACHINERY" KUNSTSTOFFE, CARL HANSER VERLAG, MUNCHEN, DE, vol. 84, no. 10, 1 octobre 1994 (1994-10-01), pages 1426-1428,1430, XP000468214 ISSN: 0023-5563

## Description

La présente invention concerne un procédé de fabrication de récipients par thermoformage dans une bande de matériau thermoplastique entraînée en pas-à-pas, dans lequel on chauffe le matériau thermoplastique, on thermoforme au moins une première rangée transversale de récipients dans une première bandelette transversale de la bande et on découpe de la bande les récipients thermoformés.

On connaît déjà un procédé de ce type, par exemple par la demande de brevet européen n° EP 1 414 638. Comme indiqué dans cette demande de brevet, il est important de faire en sorte de minimiser les pertes en matériau, constituées par les zones de déchets de la bande thermoplastique.

En particulier, la demande EP 1 414 638 prévoit une possibilité pour limiter la quantité de matériau présente dans les zones de déchets qui correspondent à l'espacement entre deux bandelettes transversales dans lesquelles on thermoforme les récipients. Dans la mesure où, lorsque l'on thermoforme des récipients dans deux rangées adjacentes de chambres de thermoformage, il faut prévoir entre elles un espace suffisant pour loger l'encombrement des parties contiguës des moules de thermoformage de ces deux rangées, ces zones de déchets forment des bandelettes transversales. EP 1 414 638 prévoit de diminuer la quantité de matériau dans ces bandelettes par un étirement préalable aux opérations de thermoformage.

Le document DE 198 04 876 divulgue un procédé dans lequel on thermoforme au moins une première rangée de récipients dans une première bandelette transversale et au moins une deuxième rangée de récipients dans une deuxième bandelette adjacente à la première ; l'accès de bandes de décor à ces rangées est ainsi facilité.

La publication Stöver C : « Maschinentechnische Entwicklungen beim Warmformen », Carl Hanser Verlag, München 1994, Kunststoffe vol. 84, n° 10, divulgue un procédé de fabrication de récipients par thermoformage, dans lequel le thermoformage et la découpe sont combinés.

Le problème des déchets est particulièrement important lorsque l'on thermoforme des récipients présentant des zones en contre-dépouille nécessitant l'utilisant de chambres de thermoformage en plusieurs parties, dont certaines doivent s'écarter pour permettre le démoulage des récipients.

La solution proposée dans EP 1 414 638 présente un intérêt certain. Toutefois, la présente invention vise à améliorer encore cet état de la technique en proposant un procédé permettant de diminuer encore la quantité de déchets.

Ce but est atteint grâce au fait que, après avoir découpé de la bande les récipients de ladite au moins une première rangée transversale, on thermoforme au moins une deuxième rangée de récipients dans une deuxième bandelette transversale de la bande, adjacente à la première bandelette et on découpe de la bande les récipients de ladite au moins une deuxième rangée et au fait que les première et deuxième bandelettes ont un ruban transversal commun.

Selon la présente invention, après avoir découpé les récipients thermoformés dans la première rangée transversale, on thermoforme les récipients de la deuxième rangée. A ce stade, du fait de l'absence des récipients de la première rangée, on dispose de tout le débattement nécessaire à loger l'épaisseur des moules de thermoformage et, même, à permettre l'ouverture de ces moules s'ils sont réalisés en plusieurs parties ouvrantes, en particulier pour le thermoformage de récipients présentant des zones en contre-dépouille. On peut en effet réaliser la deuxième rangée de récipients dans la deuxième bandelette qui a un ruban transversal commun avec la première bandelette, c'est-à-dire que ces deux bandelettes empiètent l'une sur l'autre.

Avantageusement, on thermoforme ladite au moins une deuxième rangée de récipients en décalant transversalement les récipients de la deuxième rangée par rapport à ceux de la première rangée, le décalage transversal étant de préférence sensiblement égal à la moitié de l'entraxe entre deux récipients adjacents d'une même rangée.

Ce décalage permet encore d'optimiser la quantité de déchets. En particulier, les récipients sont thermoformés à partir de zones de la bande thermoplastique qui ont en général une forme sensiblement circulaire. Le décalage permet de faire en sorte que les zones de thermoformage de la deuxième rangée soient disposées en quinconce par rapport à celles de la première rangée, ce qui est une façon de faire en sorte que les première et deuxième bandelettes aient un ruban transversal commun, c'est-à-dire qu'elles empiètent l'une sur l'autre.

Avantageusement, pour optimiser cette disposition en quinconce, le décalage transversal entre les récipients des première et deuxième rangées est sensiblement égal à la moitié de l'entraxe entre deux récipients adjacents d'une même rangée.

Avantageusement, on chauffe le matériau thermoplastique d'au moins la deuxième bandelette après avoir découpé de la bande les récipients de la première rangée transversale et avant de thermoformer la deuxième rangée de récipients.

Dans la mesure où le thermoformage des récipients de la deuxième rangée intervient dans une étape différente de celle du thermoformage des récipients de la première rangée, on peut souhaiter chauffer séparément la première et la deuxième bandelette. L'étape de chauffage supplémentaire est alors nécessaire.

On peut choisir de découper au moins certains récipients de la bande avant d'avancer la bande à la suite du thermoformage de ces récipients ou bien de faire avancer la bande après avoir thermoformé au moins certains récipients et de découper ensuite ces récipients de la bande.

Avantageusement, pour fabriquer, remplir et fermer des récipients, on fabrique les récipients en mettant en oeuvre le procédé de fabrication par thermoformage selon l'invention et, après avoir découpé de la bande les récipients thermoformés, on remplit ces récipients à l'aide d'au moins un produit, en particulier un produit alimentaire liquide et/ou pâteux, et on ferme ces récipients.

L'invention concerne également une installation pour fabriquer des récipients par thermoformage, comprenant des moyens d'entraînement en pas-à-pas d'une bande de matériau thermoplastique, des moyens de chauffage de ce matériau, des moyens de thermoformage de récipients et des moyens pour découper de la bande les récipients thermoformés, les moyens de thermoformage comprenant au moins une première station de thermoformage ayant au moins une première rangée transversale de dispositifs de thermoformage pour thermoformer des récipients dans une première bandelette transversale de la bande.

Comme indiqué précédemment, au sujet du procédé de l'invention, l'installation connue par EP 1 414 638 prévoit de diminuer la quantité de matériau présente dans des zones de déchets ménagées entre les bandelettes transversales dans lesquelles sont thermoformés les récipients de deux rangées adjacentes. L'invention a pour but d'améliorer encore cet état de la technique visant à réduire la quantité de déchets, en particulier pour le thermoformage de récipients ayant des zones en contre-dépouille.

Ce but est atteint grâce au fait que l'installation selon l'invention comporte des premiers dispositifs de découpe pour découper de la bande les récipients thermoformés dans la première station de thermoformage, une deuxième station de thermoformage, disposée en aval des premiers dispositifs de découpe et comportant au moins une deuxième rangée transversale de dispositifs de thermoformage analogues aux dispositifs de la première station pour thermoformer des récipients dans une deuxième bandelette transversale de la bande adjacente à la première bandelette et ayant un ruban transversal commun avec cette dernière, et des deuxièmes dispositifs de découpe pour découper de la bande les récipients thermoformés dans la deuxième station de thermoformage.

Lorsque l'on thermoforme les récipients dans la deuxième bandelette, dans la deuxième station de thermoformage, les récipients de la première bandelette ont déjà été découpés, de sorte que la deuxième bandelette peut être très proche de la première et avoir un ruban transversal commun avec elle.

Avantageusement, les dispositifs de thermoformage de la deuxième station de thermoformage sont décalés transversalement à la bande par rapport aux dispositifs de thermoformage de la première station.

Dans ce cas, le décalage transversal entre les dispositifs de thermoformage des première et deuxième rangées de dispositifs, mesuré par la composante transversale du plus petit entraxe entre un dispositif de la première rangée et un dispositif de la deuxième rangée, est avantageusement sensiblement égal à la moitié de l'entraxe entre deux dispositifs de thermoformage adjacents d'une même rangée.

Avantageusement, les moyens de chauffage comprennent un premier poste de chauffe disposé en amont de la première station de thermoformage et un deuxième poste de chauffe disposé entre la première et la deuxième station de thermoformage.

Les premiers et/ou les deuxièmes dispositifs de découpe peuvent être disposés en aval de, respectivement, la première et/ou la deuxième station de thermoformage, ou bien dans, respectivement, la première et/ou la deuxième station de thermoformage.

L'installation pour fabriquer des récipients par thermoformage selon l'invention fait avantageusement partie d'une chaîne de fabrication, de remplissage et de fermeture de récipients qui comprend, en outre, au moins une installation de remplissage et de fermeture de récipients.

Avantageusement, la chaîne de fabrication comprend un espace tampon situé à la sortie de l'installation de thermoformage et des moyens de transfert des récipients entre l'installation de thermoformage et l'espace tampon, et entre l'espace tampon et l'installation de remplissage et de fermeture des récipients.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'une installation permettant de mettre en oeuvre le procédé de l'invention, selon un premier mode de réalisation ;
- la figure 2 est une vue schématique d'une installation selon un deuxième mode de réalisation ;
- la figure 3 est une vue en plan d'une bande de matériau thermoplastique, montrant la localisation des zones de thermoformage des récipients de plusieurs rangées adjacentes ;
- la figure 4 est une vue de la partie d'extrémité d'un contre-moule de thermoformage selon le deuxième mode de réalisation, prise selon la flèche IV de la figure 2 ;
- la figure 5 est une vue en coupe selon la ligne V-V de la figure 4;
- la figure 6 est une vue en coupe selon la ligne VI-VI de la figure 4 ;
- La figure 7 est une vue partielle montrant schématiquement une variante par la zone VII de la figure 6 ;
- la figure 8 est une vue schématique de dessus d'une chaîne de fabrication, de remplissage et de fermeture de récipients comprenant l'installation de la présente invention ; et
- la figure 9 montre schématiquement l'unité de remplissage et de fermeture des récipients de cette chaîne.

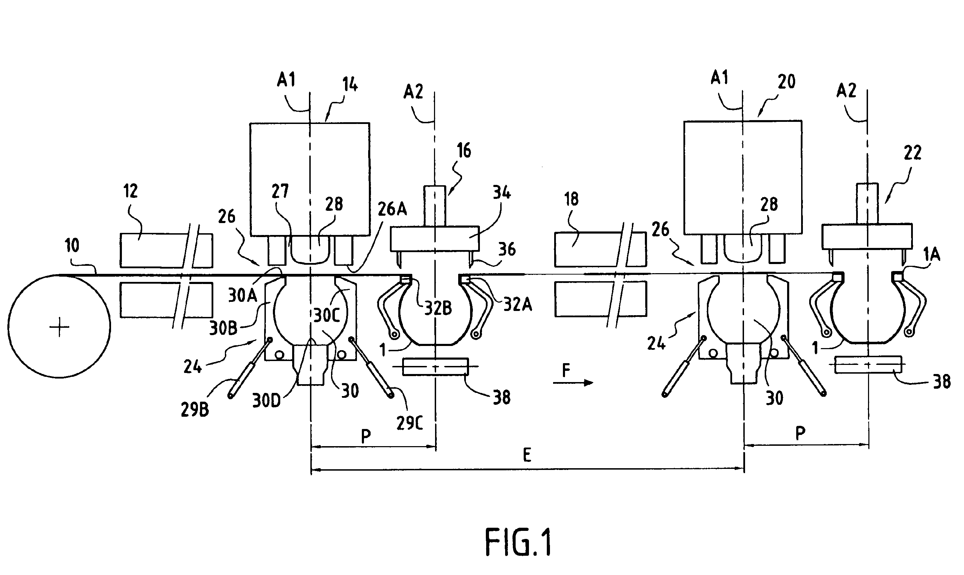

L'installation représentée sur la figure 1 permet de thermoformer des récipients 1 à partir d'une bande de matériau thermoplastique 10, entraînée en pas-à-pas par des moyens non représentés. Elle comporte, successivement disposés dans le sens d'avancement F de la bande, un premier poste de chauffage 12, une première station de thermoformage 14 qui, dans l'exemple représenté, comporte une première rangée transversale de dispositifs de thermoformage pour thermoformer des récipients dans une première bandelette transversale de la bande, des premiers dispositifs de découpe 16 pour découper de la bande les récipients thermoformés dans la première station 14, un deuxième poste de chauffage 18, une deuxième station de thermoformage 20 ayant en l'espèce une deuxième rangée transversale de dispositifs de thermoformage analogues à ceux de la première station pour thermoformer des récipients dans une deuxième bandelette transversale de la bande adjacente à la première bandelette et des deuxièmes dispositifs de découpe 22, analogues aux premiers dispositifs de découpe 16, pour découper de la bande les récipients thermoformés dans la deuxième station.

Les postes de chauffage peuvent être réalisés de telle sorte que la porte 12 ne porte à la température de thermoformage que les zones de la bande devant être thermoformées dans la première station 14 et que le poste 18 ne porte à cette température que les zones devant être thermoformées dans la deuxième station 20.

Il doit être entendu que l'on n'a représenté qu'une seule rangée de dispositifs de thermoformage pour les deux stations de thermoformage 14 et 20 afin de simplifier la figure. Bien entendu, chacune de ces deux stations peut comporter plusieurs rangées de dispositifs de thermoformage, en particulier deux rangées, auquel cas ces derniers forment des récipients dans deux bandelettes distinctes, espacées l'une de l'autre de manière à ménager entre elles une bandelette dans laquelle des récipients sont thermoformés dans l'autre station. Chaque dispositif de thermoformage comporte, de manière connue en soi, un moule de thermoformage 24 et un contre-moule 26, disposés de part et d'autre du trajet de la bande thermoplastique 10. Le contre-moule 26 comporte un piston 28 pour chaque chambre de thermoformage 30 du moule 24, ce piston pouvant être déplacé dans la chambre 30 pour repousser dans cette dernière le matériau thermoplastique.

On considèrera dans la suite que les chambres de thermoformage sont situées sous la bande 10, tandis que les contre-moules sont situés au-dessus de cette bande. Bien entendu, une disposition inverse pourrait être envisagée.

De manière connue en soi, pour permettre le thermoformage, le contre-moule est déplacé vers le bas pour que le bord inférieur 26A de chaque alvéole 27 du contre-moule dans laquelle se déplace un piston pince le matériau thermoplastique contre le bord supérieur 30A de chaque chambre de thermoformage.

En l'espèce, les récipients thermoformés présentent des zones en contre-dépouille puisque chaque chambre 30 présente, en son intérieur, une zone de diamètre supérieur à celui de son ouverture. Pour permettre le démoulage, la paroi de chaque chambre de thermoformage est réalisée en plusieurs parties, deux parties 30B et 30C pouvant être écartées l'une de l'autre par des vérins 29B, 29C provoquant leur rotation. En l'espèce, les chambres de thermoformage présentent également une partie de fond 30D, contre laquelle est réalisé le fond de chaque récipient, qui n'est pas nécessairement déplacée lors de l'ouverture des parties 30B et 30C. Une fois celles-ci écartées, le moule 24 est abaissé pour que le fond d'un récipient échappe au bord supérieur des chambres de thermoformage, permettant ainsi l'avancement de la bande 10.

De manière connue en soi, l'installation peut comporter des moyens de banderolage disposant dans les chambres de thermoformage des banderoles destinées à ceinturer la paroi des récipients.

Après leur démoulage, les récipients, qui sont toujours solidaires de la bande 10, sont avancés dans les dispositifs de découpe 16 et 22.

Ces dispositifs comportent des moyens pour maintenir les récipients par leur col, constitués par exemple de deux demi-colliers 32A et 32B, qui sont articulés l'un par rapport à l'autre pour pouvoir constituer un support annulaire et un contre-couteau de découpe coopérant avec le col des récipients par le dessous de la bande, et être écartés l'un de l'autre pour permettre la disposition des récipients entre ces demi-colliers lors de l'avancement de la bande. L'outil de découpe 34 est disposé au-dessus de la bande et présente un couteau annulaire 36 qui, lorsque l'outil 34 est déplacé vers le bas, vient cisailler le matériau thermoplastique dans la région du bord des récipients en coopérant avec le contre-couteau 32A, 32B.

Les récipients découpés tombent, après un léger écartement des demi-colliers 32A et 32B sur un support de réception et d'évacuation 38.

Sur la figure 1, on a représenté en trait épais les portions de la bande qui sont pleines, tandis que l'on a représenté en trait fins les portions dans lesquelles les récipients ont été thermoformés et découpés dans la première station de thermoformage 14 et les premiers dispositifs de découpe 16.

On voit sur cette figure que, dans le poste 20, c'est une portion pleine de la bande, non affectée par le thermoformage, qui se trouve entre le moule et le contre-moule de thermoformage. Dans la deuxième station de thermoformage, les récipients sont donc formés dans ces zones pleines.

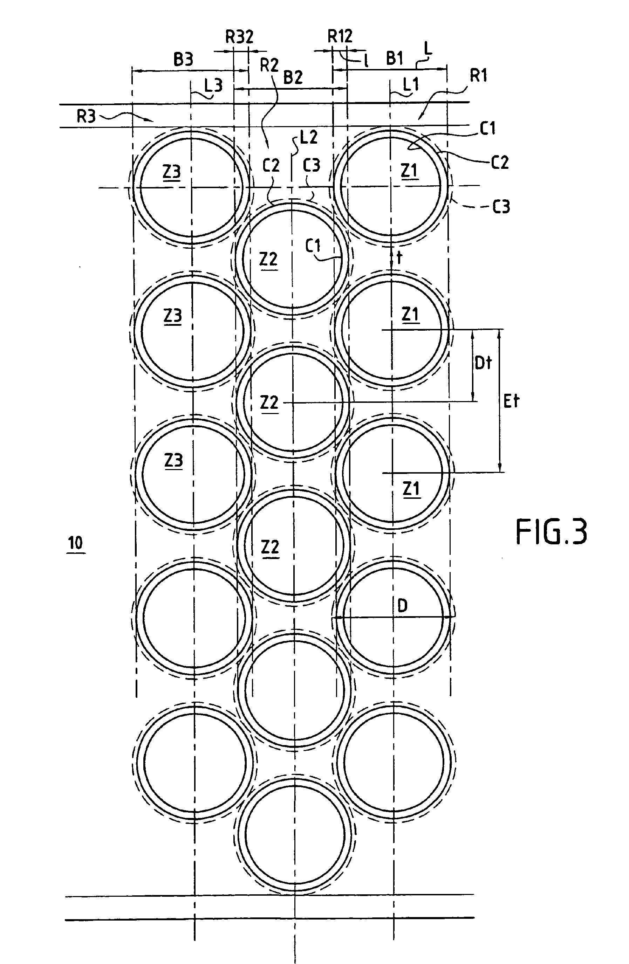

Les dispositifs de découpe 16 sont écartés des dispositifs de thermoformage de la première station 14, d'une distance correspondant à un pas d'avancement P de la bande, cette distance étant mesurée entre les axes A1 et A2 de déplacement et de symétrie de, respectivement, les pistons 28 et les outils de découpe 34. Ceci est également valable pour la distance entre les dispositifs de découpe 22 et les dispositifs de thermoformage de la station 20. En revanche, l'espacement E entre les dispositifs de thermoformage des stations 14 et 20 destinées à respectivement former des récipients dans deux bandelettes adjacentes de la bande, mesuré entre les axes A1 de leurs pistons, est différent d'un multiple du pas d'avancement P. En particulier, il est avantageusement égal à (n+1/2). P, où N représente un nombre entier. Ceci signifie que les axes de symétrie L2 des deuxièmes bandelettes dans lesquelles les récipients sont formés dans la station 20 sont équidistants des axes de symétrie L1 (voir figure 3) des premières bandelettes dans lesquelles les récipients sont formés dans la station 14.

Selon le procédé mis en oeuvre dans l'installation de la figure 1, les récipients sont découpés après leur thermoformage, puisque les dispositifs de découpe respectifs 16 et 22 sont disposés en aval des stations de thermoformage respectives 14 et 20.

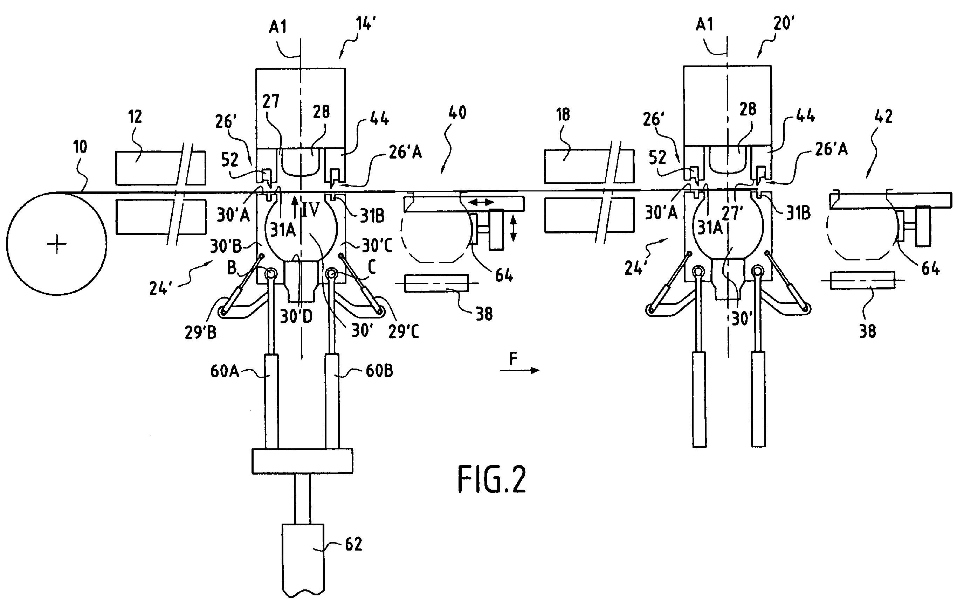

Sur la figure 2, la découpe est en revanche réalisée dans les dispositifs de thermoformage.

L'installation de la figure 2 comporte, successivement disposés dans le sens F d'avancement de la bande, un premier poste de chauffage 12, une première station de thermoformage 14', un deuxième poste de chauffage 18 et une deuxième station de thermoformage 20'. Des moyens de transfert des récipients, respectivement 40 et 42, sont respectivement disposés en aval des stations 14' et 20' pour transférer, sur un support 38, les récipients thermoformés dans la station considérée.

Pour permettre la découpe des récipients directement dans la station de formage 14' ou 20', des outils de découpe et de contre-découpe sont directement formés sur, respectivement, le bord inférieur 26'A de chaque alvéole 27 du contre-moule 26' dans laquelle se déplace un piston 28 et le bord supérieur 30'A de chaque chambre de thermoformage 30' du moule 24'. Par ailleurs, le bord inférieur 26'A de l'alvéole et le bord supérieur 30'A de la chambre sont conformés de manière à pincer le matériau thermoplastique lorsque le contre-moule est descendu contre le moule.

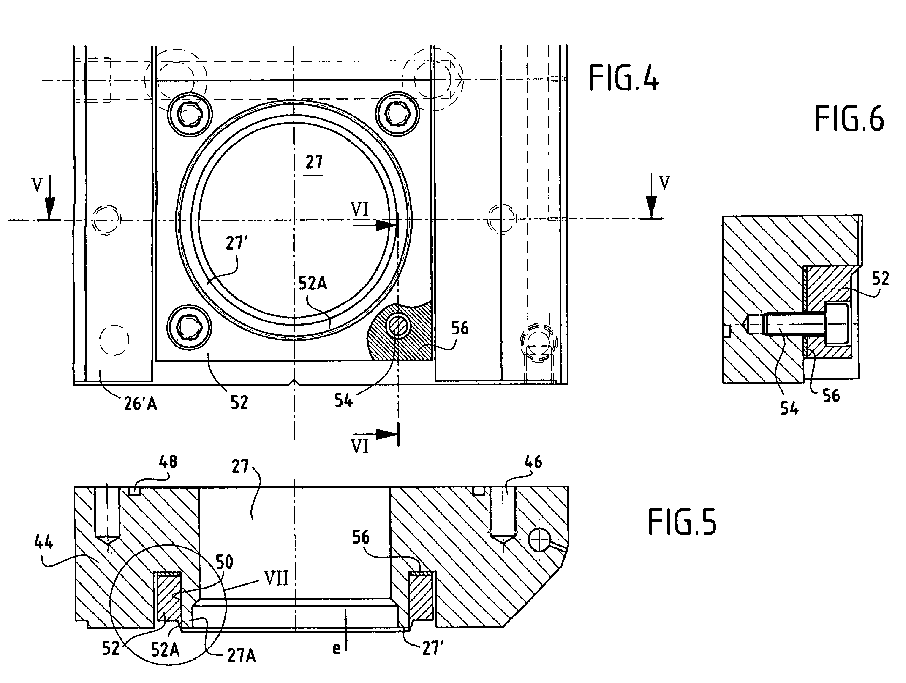

La conformation de l'outil de coupe équipant le bord inférieur 26'A de l'alvéole 27 est représentée plus en détail sur les figures 4 à 6. On voit en effet sur la figure 4 une alvéole 27, dans laquelle peut se déplacer le piston 28, et le bord inférieur 26'A de cette alvéole. Comme on le voit sur la figure 5, la pièce représentée est une pièce creuse 44, qui peut être fixée au contre-moule par des moyens tels que des vis vissées dans les taraudages 46, soit pour former l'intégralité de la hauteur de l'alvéole dans laquelle se déplace un piston 28, soit pour former seulement une partie d'extrémité inférieure de cette alvéole. Le plan de joint est muni d'une gorge 48 pour des moyens d'étanchéité permettant la mise en pression de l'intérieur du récipient en cours de thermoformage à partir du piston 28, de manière connue en soi. La face inférieure de la pièce 44, qui forme l'extrémité libre 26'A de l'alvéole 27, présente un renfoncement frontal 50 dans lequel est logé un outil de découpe. Ce renfoncement est formé à l'extérieur de la paroi annulaire 27A qui délimite l'alvéole et qui s'étend jusqu'à l'extrémité libre de cette dernière, en présentant une surface d'extrémité libre 27' qui est plane pour, en coopérant avec une surface d'extrémité libre 31A (voir figure 2) de la chambre 30', pincer le matériau thermoplastique après sa découpe.

Une telle découpe est formée par un couteau 52 dont la lame annulaire 52A est disposée contre la face externe de la paroi annulaire 27A. Ce couteau est fixé dans le renfoncement 50 par tout moyen approprié, tel que des vis de fixation 54 traversant des perçages du couteau et vissées dans des taraudages de la pièce 44. Pour permettre sa fixation aisée, le couteau présente localement des dimensions suffisantes pour le passage de ces vis, par exemple en ayant un contour extérieur de forme carrée ménageant aux quatre coins, entre le pourtour annulaire et circulaire de la lame 52A et le pourtour extérieur carré du couteau, le support nécessaire aux vis 54. Le couteau constitue une pièce d'usure qui peut être aisément démontée. Une cale 56 est disposée au fond du renfoncement 50, entre le couteau et le fond de ce renfoncement.

En se référant à nouveau à la figure 2, on constate que le bord supérieur 30'A de la chambre de thermoformage 30' présente une gorge annulaire 31B, qui délimite, sur le bord de la chambre 30, la surface de pincement 31A précédemment évoquée. Lors de la découpe, la lame 52A du couteau 52 pénètre dans cette gorge pour cisailler le matériau thermoplastique. Dans la mesure où la lame dépasse sur une très faible distance e de la surface d'extrémité 27' de l'alvéole 27, le disque de matériau thermoplastique découpé par le couteau 52 est, immédiatement après sa découpe, pincé entre les surfaces de pincement 27' et 31A.

Comme sur l'exemple de la figure 1, les récipients thermoformés dans l'installation de la figure 2 présentent des zones en contre-dépouille. En conséquence, pour permettre leur démoulage, la paroi de la chambre de thermoformage 30' est réalisée en plusieurs parties, qui peuvent être écartées l'une de l'autre. Elle comporte ainsi deux parties latérales, 30'B et 30'C, qui sont articulées l'une par rapport à l'autre par exemple par des vérins 29'B et 29'C commandant leur pivotement autour de leurs axes respectifs B et C. La paroi de la chambre comporte également une partie de fond 30'D. Lors du démoulage, les deux parties 30'B et 30'C peuvent s'ouvrir l'une par rapport à l'autre sans provoquer un déplacement de la partie de fond 30'D. En étant monté sur des moyens de commande de translation tels que des vérins, respectivement 60A et 60B, ces deux parties 30'B et 30'C peuvent, lorsqu'elles sont ouvertes l'une par rapport à l'autre, être descendues sans déplacement de la partie de fond 30'D. Lors de son démoulage, le récipient peut donc être supporté par cette partie de fond 30'D.

Il convient de relever que, pour faciliter le dévêtissement du récipient après sa découpe, on peut prévoir que la chambre 30 puisse être légèrement déplacée vers le bas avant l'ouverture des parties 30'B et 30'C. C'est pourquoi un vérin principal 62 a été représenté sur la figure 2. Il suffit d'un déplacement vers le bas de quelques millimètres pour dévêtir l'outil de coupe et détacher complètement le récipient coupé de la bande 10, avant son démoulage réalisé par l'ouverture des parties 30'B et 30'C.

A l'issue de ce démoulage, le récipient est supporté par la partie de fond 30'D, sur lequel il pourra être saisi par les moyens de transfert comprenant un préhenseur. Dans l'exemple représenté, les moyens de transfert 40 et 42, respectivement disposés en aval des stations 14' et 20', comportent des moyens de préhension tels qu'une ventouse 64 qui peut être déplacée en translation en va-et-vient, vers l'amont pour venir saisir un récipient venant d'être thermoformé et vers l'aval pour amener ce récipient saisi au-dessus du support de transfert 38. Le récipient peut soit être relâché au-dessus de ce support, soit déposé sur ce dernier par un déplacement en va-et-vient haut et bas de la ventouse.

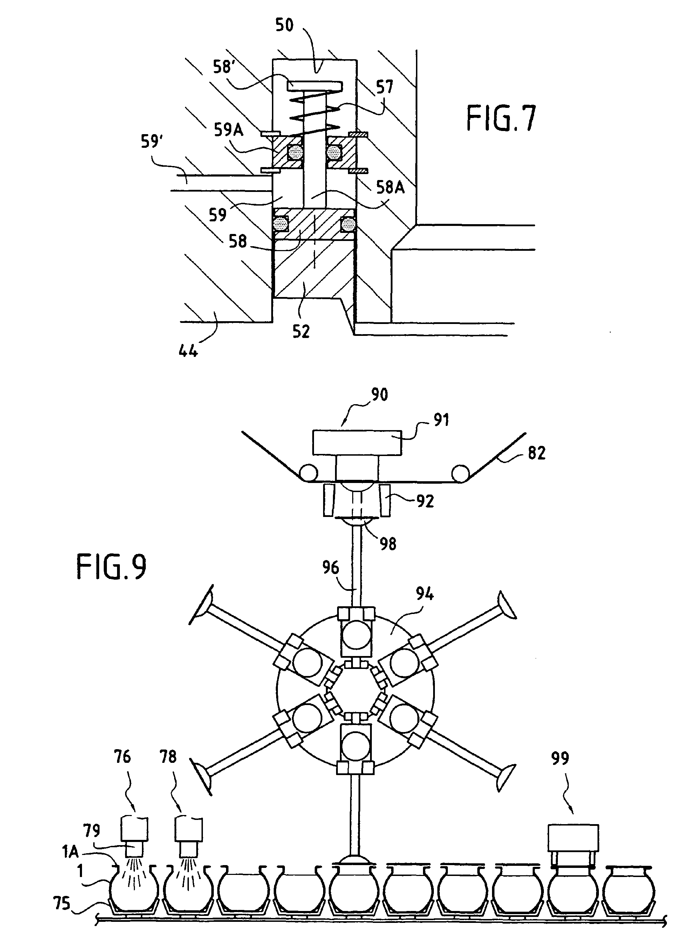

Dans l'exemple représenté sur la figure 2, les outils de découpe constitués par les couteaux 52 sont fixés sur le contre-moule et sont donc solidaires du déplacement en translation de ce dernier. En variante, on pourrait prévoir que des couteaux analogues soient solidaires du contre-moule, tout en étant déplaçables en translation par rapport à ce dernier pour provoquer une découpe après la fermeture du contre-moule contre le moule. Par exemple, comme représenté sur la figure 7, le couteau 52 peut être monté en étant fixé sur une plaque mobile 58 délimitant, au fond du renfoncement 50 de la pièce 44, une chambre 59 pouvant être alimentée en pression par un conduit 59' ou vidangée. On comprend que l'alimentation en pression de la chambre 59 provoque un déplacement vers le bas du couteau 52, comme représenté sur la figure 7. Lorsque la chambre est vidangée, le couteau peut s'escamoter à l'intérieur du renfoncement 50, par exemple en étant rappelé vers le haut à l'aide d'un ressort de rappel 57 disposé, en dehors de la chambre 59, entre un épaulement 58' d'une tige 58A solidaire de la plaque 58 et une paroi de fond 59A de la chambre, à travers laquelle passe cette tige.

La figure 3 montre la disposition des zones de la bande thermoplastique 10 dans laquelle les récipients seront thermoformés dans les stations respectives de thermoformage. La figure 3 montre la bande en vue de dessus, et l'on a identifié une première bandelette transversale B1 dans laquelle une première rangée R1 de récipients sera formée dans la première station de thermoformage 14 ou 14', une deuxième bandelette transversale B2 dans laquelle une deuxième rangée R2 de récipients sera formée par la deuxième station 20 ou 20', et une troisième bandelette B3, analogue à la première, dans laquelle une troisième rangée R3 de récipients sera formée par la première station.

On a représenté, pour chacune des zones dans laquelle un récipient sera thermoformé, le contour intérieur du bord du récipient par un premier cercle C1, le contour extérieur de la découpe du récipient par un deuxième cercle C2, et la partie de diamètre maximum du récipient par un troisième cercle C3, en traits interrompus. Les récipients de la première bandelette B1 seront formés avant les récipients de la deuxième bandelette, de sorte qu'on dispose de part et d'autre de la première bandelette de l'espace suffisant pour le moule de thermoformage de la première station en permettant si nécessaire l'ouverture des parties ouvrantes de ce moule puisque, en l'espèce, les récipients ont des zones en contre-dépouille.

On voit que les zones de récipients Z1 de la première bandelette B1 sont espacées les unes des autres dans le sens transversal T de la bande sur des distances t suffisantes pour permettre le passage, entre elles, des parois des chambres de thermoformage de la rangée de chambres de la station 14. Comme indiqué précédemment, après avoir thermoformé les récipients dans la première bandelette, on les découpe de la bande 10, avant de thermoformer des récipients dans la deuxième bandelette B2. On voit en l'espèce que les zones de récipients Z2 de la deuxième bandelette B2 sont extrêmement proches des zones Z1 de la première bandelette B1, puisque, pour ces deux bandelettes, les cercles de découpe extérieure C2 sont à une très faible distance les uns des autres. Cette distance est juste suffisante pour tenir compte des tolérances de fabrication et, après la découpe, conserver à la bande thermoplastique 10 la structure suffisante pour permettre son entraînement en pas-à-pas. Les cercles C3 marquant la zone de diamètre la plus grande des récipients se touchent pratiquement entre les zones Z1 et Z2 alors que si les récipients des bandelettes B1 et B2 étaient thermoformés dans un même pas de temps et dans la même station, une distance supérieure à la distance t précitée devrait être préservée entre ces cercles, pour permettre non seulement le passage, entre les zones à récipients, de l'épaisseur de la paroi des moules mais également, s'agissant dans l'exemple représenté de récipients ayant des zones en contre-dépouille, l'ouverture des parties articulées des parois des chambres de thermoformage.

On constate sur la figure 3 que les récipients de la deuxième rangée R2, thermoformés dans les zones à récipients Z2 de la bandelette B2, sont décalés transversalement (dans le sens T) par rapport à ceux de la première rangée R1, thermoformés dans les zones Z1. En l'espèce, le décalage transversal Dt entre les récipients des deux rangées, mesuré, parallèlement à la direction T, entre les centres d'une zone Z1 et d'une zone Z2 adjacente, est sensiblement égal à la moitié de l'entraxe Et entre deux récipients adjacents d'une même rangée, mesuré entre les centres de deux zones Z1 adjacentes ou de deux zones Z2 adjacentes. En d'autres termes, les récipients des rangées adjacentes R1 et R2 sont disposés en quinconce les uns par rapport aux autres.

Cette disposition en quinconce optimise les pertes de matières, en diminuant les zones de déchets de la bande.

Bien entendu, ce décalage transversal Dt est obtenu grâce au fait que les dispositifs de thermoformage de la deuxième station 20 ou 20' (les chambres et les pistons) sont décalés transversalement de manière correspondante par rapport au dispositif de thermoformage de la première station 14 ou 14'.

Sur la figure 3, chacune des rangées R1, R2 et R3 comporte le même nombre de zones à récipients, c'est-à-dire que le même nombre de récipients est formé dans chacune des stations de thermoformage. En conséquence, un côté de la bande thermoplastique est situé à l'extrémité des rangées R1 et R3, tandis que l'autre côté est situé à l'extrémité des zones de la rangée R2. On pourrait toutefois prévoir que cette dernière comporte une zone à récipients de moins pour que les deux extrémités des rangées R1 et R3 soient sur les deux bords de la bande.

On constate sur la figure 3 que les bandelettes B1 et B2 ont un ruban transversal commun R12, et que les bandelettes B2 et B3 ont un ruban transversal commun R32. Ceci est rendu possible grâce au décalage transversal Dt précité, et précisément la disposition en quinconce des zones à récipients. En effet, les zones à récipients Z2 sont partiellement insérées entre les zones à récipients Z1, de sorte que leurs bords aval vont légèrement au-delà des bords amont des zones Z1. Cette particularité permet d'optimiser encore les pertes de matière en ne conservant que juste le matériau nécessaire dans la bande thermoplastique, après découpe des récipients.

Avantageusement, la largeur I du ruban commun R12 ou R32 est comprise entre 0,05.L et 0,2.L, de préférence entre 0,07.L et 0,15.L où L représente la largeur des bandelettes transversales B1, B2 et B3.

Comme indiqué précédemment, les première et deuxième installations de thermoformage sont distantes l'une de l'autre d'une distance différente d'un multiple entier du pas d'avancement de la bande. En conséquence, la distance entre les lignes médianes L1 de la première bandelette et L2 de la deuxième bandelette est égale à i.P où P est le pas d'avancement de la bande et i est un nombre compris entre 0 et 1, avantageusement sensiblement égal à 0,5.

i.P est inférieur à la plus grande dimension diamétrale des chambres de thermoformage qui correspond au diamètre du cercle C3 de la figure 3.

Avantageusement, i.P est compris entre 0,7.D et 0,95D, de préférence entre 0,75.D et 0,85.D où D est le diamètre du cercle C3.

Si l'on considère les dispositifs de thermoformage de l'installation de thermoformage, le décalage transversal Dt identifié sur la figure 3 correspond à la composante transversale du plus petit entraxe entre un dispositif de thermoformage de la première rangée (c'est-à-dire un dispositif de la première station 14 ou 14'), et un dispositif de thermoformage à la deuxième rangée (c'est-à-dire de la deuxième station 20 ou 20'). L'entraxe Et est quant à lui mesuré par l'entraxe entre deux dispositifs de thermoformage d'une même rangée. Ces entraxes sont mesurés entre des axes A1 de translation des pistons.

Les figures 1 et 2 qui sont schématiques montrent une seule rangée de dispositifs de thermoformage dans chacune des stations de thermoformage. En variante, chaque station peut comporter plusieurs rangées, en particulier deux rangées. Ainsi, des récipients peuvent être simultanément formés, dans la première station 14 ou 14', dans les zones Z1 de la première bandelette B1 et dans les zones Z3 de la deuxième bandelette B3. En effet, l'espacement longitudinal entre ces bandelettes B1 et B3, qui correspond (aux rubans transversaux R12 et R32 près), à la largeur de la bandelette B2, peut être suffisant pour permettre le démoulage des récipients formés dans les zones Z1 et Z3. Ainsi, il est avantageux que chaque station de thermoformage comporte deux rangées de dispositifs de thermoformage permettant de thermoformer simultanément des récipients dans deux bandelettes non adjacentes, telles que les bandelettes B1 et B3.

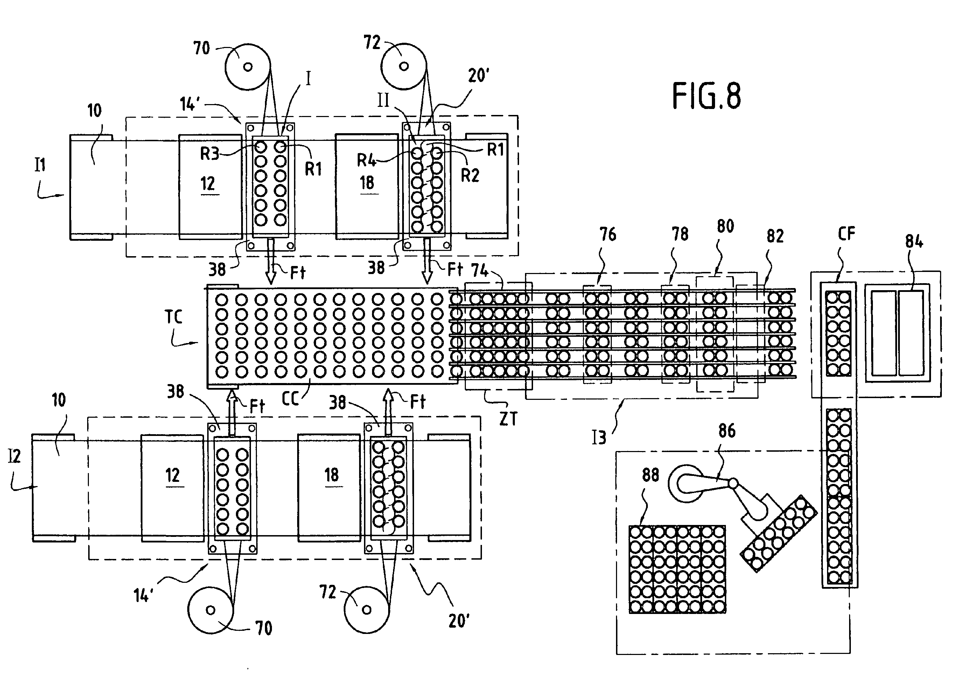

On décrit maintenant la figure 8 qui montre, en vue de dessus, l'implantation d'une chaîne permettant la fabrication de récipients par thermoformage, leur remplissage, leur fermeture et leur palettisation. De part et d'autre d'une travée centrale TC équipée d'un convoyeur central CC, la chaîne comporte deux installations de thermoformage, respectivement I1 et I2, conformes à celle qui vient d'être décrite en référence aux figures précédentes.

Plus particulièrement, ces installations sont conformes à celles de la figure 2 et l'on reconnaît les postes de chauffage 12 et 18, la première station de thermoformage 14' dans laquelle sont simultanément formées deux rangées non adjacentes de récipients R1 et R3 et la deuxième station de thermoformage 20' dans laquelle sont thermoformées deux autres rangées de récipients non adjacentes R2 et R4, intercalées entre les rangées de récipients thermoformés dans la première station 14' (qui ont été découpés de la bande avant que celle-ci ne parvienne dans la deuxième station 20') et décalées transversalement par rapport à elles.

Ces installations de thermoformage sont équipées de moyens de banderolage de tout type convenable, et l'on a simplement identifié des bandelettes de banderolage, respectivement 70 et 72 permettant, pour chaque station, de banderoler des récipients fabriqués dans la station considérée.

On a également représenté pour chaque installation des supports 38 sur lesquels les récipients sont disposés après leur découpe de la bande 10. Par des moyens de transfert appropriés, simplement schématisés par des flèches Ft, les récipients sont transférés de ces supports 38 sur le convoyeur central CC. Les installations de thermoformage I1 et I2 sont analogues, à ceci près que, dans la mesure où elles sont disposées de part et d'autre du convoyeur central CC, le banderolage s'effectue pour chaque station à partir du côté opposé au convoyeur central. Le transfert des récipients à partir des supports 38 sur le convoyeur central CC s'effectue de telle sorte que des récipients sont disposés sur ce convoyeur en supprimant le décalage transversal entre les récipients thermoformés dans les stations respectives 14' et 20'.

En sortie du convoyeur central CC, les récipients sont disposés dans un espace tampon Zt en étant supportés par tout moyen approprié, tel que des rails 74 sur lesquels reposent les rebords 1A de récipients, s'étendant entre les cercles C1 et C2 représentés sur la figure 3. Les récipients sont alors amenés dans une installation I3 de remplissage et de fermeture.

On a simplement représenté sur la figure 8 une première zone de remplissage 76 permettant de disposer dans les récipients un premier produit, et une deuxième zone de remplissage 78, disposée en aval de la première, pour ajouter un produit supplémentaire, par exemple de nappage. En aval de cette deuxième zone de remplissage 78, l'installation I3 comporte un poste de fermeture des récipients 80, dans lequel les opercules de fermeture, découpés à partir d'une bande à opercules 82 sont disposés sur les rebords des récipients et scellés sur ces derniers. Pour avancer en pas-à-pas dans l'installation 13, les récipients coopèrent par exemple avec des supports inférieurs 75 (voir figure 9) eux-mêmes entraînés en pas-à-pas.

En sortie de l'installation I3, et à l'aide de tout moyen de transfert approprié, les récipients sont saisis sur le rail 74 et disposés sur un convoyeur final CF tel qu'un tapis roulant alimenté périodiquement en supports de groupes de récipients 84. Ce convoyeur CF dégage des récipients disposés sur ces supports sur le côté de l'installation 13, et un bras de palettisation 86 saisit les groupes de récipients avec leurs supports à la sortie du convoyeur CF, pour les disposer en palettes 88.

A titre d'exemple, on a illustré sur la figure 9 le remplissage des récipients 1 dans la zone de remplissage 78, à l'aide de buses de remplissage 79, et la fermeture de ces récipients dans le poste de fermeture 80.

Sur la figure 9, on a représenté, à titre d'exemple, un dispositif permettant la mise en place et le scellage d'opercules sur les ouvertures des récipients, en optimisant les pertes de matières dans la bande d'opercules 82. Ce dispositif est décrit ci-après de manière succincte, sachant qu'on pourra se reporter à la demande de brevet européen n° EP 1 312 548 pour plus de détails.

Le dispositif comprend des moyens de convoyage de la bande à opercules 82 au-dessus des récipients et à distance de ces derniers. Sur le trajet de la bande, sont disposés des moyens de découpe 90 de disques d'opercules, qui comprennent, de manière classique, des poinçons 91 et des matrices 92. A chaque pas, une rangée d'opercules en forme de disque est découpée dans la bande 82. Lors de la découpe d'un opercule, la bande est supportée par un bras, par exemple un bras à ventouses, alors en position haute, dans une matrice 92. En effet, un dispositif de barillet 94 comprend une pluralité de bras radiaux 96 qu'il ramène tour à tour sous la matrice 92, ces bras étant télescopiques pour se déplacer dans les matrices et venir au contact de la bande 82, comme indiqué en trait interrompu pour le bras 96 situé verticalement vers le haut sur la figure 9. Les bras sont équipés de préhenseurs tels que des ventouses 98 qui saisissent les opercules lors de leur découpe. Après la découpe d'un opercule, le bras est ramené en position de retrait, comme indiqué en trait plein, et le barillet est entraîné sur un pas de rotation pour que le bras, portant un opercule, soit écarté des moyens de découpe 90. Dans l'exemple représenté, le barillet comporte six rangées de bras 96, espacées régulièrement et angulairement, pour amener progressivement les opercules au droit des orifices supérieurs des récipients. Lorsqu'un bras a atteint sa position verticale inférieure, il place l'opercule qu'il porte sur l'ouverture d'un récipient. L'opercule ainsi disposé est alors centré par tout moyen approprié et scellé en travers de cette ouverture dans un poste de scellage 99 disposé en aval du barillet 94.

## Revendications

1. Procédé de fabrication de récipients par thermoformage dans une bande de matériau thermoplastique (10) entraînée en pas-à-pas, dans lequel on chauffe le matériau thermoplastique, on thermoforme au moins une première rangée transversale (R1) de récipients dans une première bandelette transversale (B1) de la bande (10) et on découpe de la bande les récipients (1) thermoformés,
**caractérisé en ce que**, après avoir découpé de la bande (10) les récipients (1) de ladite au moins une première rangée transversale (R1), on thermoforme au moins une deuxième rangée de récipients (R2) dans une deuxième bandelette transversale (B2) de la bande, adjacente à la première bandelette (B1) et on découpe de la bande les récipients de ladite au moins une deuxième rangée et **en ce que** les première et deuxième bandelettes (B1, B2) ont un ruban transversal commun (R12).

2. Procédé selon la revendication 1, **caractérisé en ce qu'**on thermoforme ladite au moins une deuxième rangée (R2) de récipients en décalant transversalement les récipients de la deuxième rangée par rapport à ceux de la première rangée (R1).

3. Procédé selon la revendication 2, **caractérisé en ce que** le décalage transversal (Dt) entre les récipients des première et deuxième rangées (R1, R2) est sensiblement égal à la moitié de l'entraxe (Et) entre deux récipients adjacents d'une même rangée.

4. Procédé selon l'une quelconque des revendications 1 à 3, **caractérisé en ce qu'**on chauffe le matériau thermoplastique (10) d'au moins la deuxième bandelette (B2) après avoir découpé de la bande les récipients (1) de la première rangée transversale et avant de thermoformer la deuxième rangée de récipients.

5. Procédé selon l'une quelconque des revendications 1 à 4, **caractérisé en ce qu'**on découpe au moins certains récipients (1) de la bande (10), avant d'avancer la bande à la suite du thermoformage de ces récipients.

6. Procédé selon l'une quelconque des revendications 1 à 4, **caractérisé en ce que** après avoir thermoformé au moins certains récipients (1), on fait avancer la bande (10) puis l'on découpe ces récipients de la bande.

7. Procédé de fabrication, de remplissage et de fermeture de récipients, **caractérisé en ce que** l'on fabrique les récipients (1) en mettant en oeuvre le procédé selon l'une quelconque des revendications 1 à 6 et **en ce que**, après avoir découpé de la bande les récipients thermoformés, on remplit ces récipients à l'aide d'au moins un produit, en particulier un produit alimentaire liquide et/ou pâteux, et on ferme ces récipients.

8. Installation pour fabriquer des récipients par thermoformage, comprenant des moyens d'entraînement en pas-à-pas d'une bande de matériau thermoplastique (10), des moyens de chauffage (12, 18) de ce matériau, des moyens de thermoformage de récipients et des moyens pour découper de la bande les récipients thermoformés, les moyens de thermoformage comprenant au moins une première station de thermoformage (14, 14') ayant au moins une première rangée transversale de dispositifs de thermoformage (24, 26 ; 24', 26') pour thermoformer des récipients (1) dans une première bandelette transversale (B1) de la bande,
**caractérisée en ce qu'**elle comporte des premiers dispositifs de découpe (16 ; 52, 30'A) pour découper de la bande les récipients (1) thermoformés dans la première station de thermoformage (14, 14'), une deuxième station de thermoformage (20, 20'), disposée en aval des premiers dispositifs de découpe et comportant au moins une deuxième rangée transversale de dispositifs de thermoformage (24, 26 ; 24', 26') analogues aux dispositifs de la première station pour thermoformer des récipients (1) dans une deuxième bandelette transversale (B2) de la bande adjacente à la première bandelette (B1) et ayant un ruban transversal (R12) commun avec cette dernière, et des deuxièmes dispositifs de découpe (22 ; T2, 30'A) pour découper de la bande les récipients thermoformés dans la deuxième station de thermoformage.

9. Installation selon la revendication 8, **caractérisée en ce que** les dispositifs de thermoformage (24, 26 ; 24', 26') de la deuxième station de thermoformage (20, 20') sont décalés transversalement (Dt) à la bande par rapport aux dispositifs de thermoformage de la première station (14, 14').

10. Installation selon la revendication 9, **caractérisée en ce que** le décalage transversal (Dt) entre les dispositifs de thermoformage (24, 26 ; 24', 36') des première et deuxième rangées (14, 14' ; 20, 20') de dispositifs, mesuré par la composante transversale du plus petit entraxe entre un dispositif de la première rangée et un dispositif de la deuxième rangée, est sensiblement égal à la moitié de l'entraxe (Et) entre deux dispositifs de thermoformage adjacents d'une même rangée.

11. Installation selon l'une quelconque des revendications 8 à 10, **caractérisée en ce que** les moyens de chauffage comprennent un premier poste de chauffe (12) disposé en amont de la première station de thermoformage (14, 14') et un deuxième poste de chauffe (18) disposé entre la première et la deuxième station de thermoformage (20, 20').

12. Installation selon l'une quelconque des revendications 8 à 11, **caractérisée en ce que** les premiers et/ou les deuxièmes dispositifs de découpe (16, 22) sont disposés en aval de, respectivement, la première et/ou la deuxième station de thermoformage (14, 20).

13. Installation selon l'une quelconque des revendications 8 à 11, **caractérisée en ce que** les premiers et/ou les deuxièmes dispositifs de découpe (52 ; 30'A) sont disposés dans, respectivement, la première et/ou la deuxième station de thermoformage (14', 20').

14. Installation selon la revendication 13, **caractérisé en ce que** les premiers et/ou les deuxièmes dispositifs de découpe comprennent, pour la découpe de récipients thermoformés dans une chambre de thermoformage (30), un outil de découpe (52) apte à être déplacé en translation pour coopérer avec un contre-outil (30'A) solidaire de la chambre de thermoformage (30).

15. Chaîne de fabrication, de remplissage et de fermeture de récipients, **caractérisée en ce qu'**elle comprend, pour fabriquer les récipients, au moins une installation (I1, 12) selon l'une quelconque des revendications 8 à 14, et **en ce qu'**elle comprend, en outre, une installation (13) de remplissage et de fermeture de récipients.

16. Chaîne de fabrication selon la revendication 15, **caractérisée en ce qu'**elle comprend un espace tampon (ZT) situé à la sortie de l'installation de thermoformage et des moyens de transfert des récipients entre l'installation de thermoformage (I1, IZ) et l'espace tampon et entre l'espace tampon et l'installation de remplissage et de fermeture des récipients (I3).

## Claims

1. A method of manufacturing containers by thermoforming them in a strip of thermoplastic material (10) driven stepwise, the method comprising heating the thermoplastic material, thermoforming at least one first transverse row (R1) of containers in a first transverse segment (B1) of the strip (10), and cutting the thermoformed containers (1) from the strip;
said method being **characterized in that** it further comprises, after the containers (1) of said at least one first transverse row (R1) have been cut out from the strip (10), thermoforming at least one second row of containers (R2) in a second transverse segment (B2) of the strip, which second segment is adjacent to the first segment (B1), and cutting the containers of said at least one second row from the strip, and **in that** the first and second segments (B1, B2) share a common transverse margin (R12).

2. A method according to claim 1, **characterized in that** said at least one second row (R2) of containers are thermoformed with the containers of the second row being offset transversely relative to the containers of the first row (R1).

3. A method according to claim 2, **characterized in that** the transverse offset (Dt) between the containers of the first and second rows (R1, R2) is substantially equal to one half of the center-to-center distance (Et) between two adjacent containers of the same row.

4. A method according to any one of claims 1 to 3, **characterized in that** the thermoplastic material (10) of at least the second segment (B2) is heated after the containers (1) of the first transverse row have been cut out and before the second row of containers are thermoformed.

5. A method according to any one of claims 1 to 4, **characterized in that** at least certain containers (1) are cut out from the strip (10) before the strip is advanced after those containers have been thermoformed.

6. A method according to any one of claims 1 to 4, **characterized in that** after at least certain containers (1) have been thermoformed, the strip (10) is advanced and then those containers are cut out from the strip.

7. A method of manufacturing, filling, and closing containers, said method being **characterized in that** the containers (1) are manufactured by implementing the method according to any one of claims 1 to 6, and **in that**, after the thermoformed containers have been cut out from the strip, said containers are filled with at least one substance, in particular a liquid and/or semi-liquid foodstuff, and said containers are closed.

8. An installation for manufacturing containers by thermoforming, said installation comprising stepper drive means for driving a strip of thermoplastic material (10) stepwise, heater means (12, 18) for heating said material, thermoforming means for thermoforming containers, and cutting means for cutting the thermoformed containers out from the strip, the thermoforming means comprising at least a first thermoforming station (14, 14') having at least one first transverse row of thermoforming devices (24, 26; 24', 26') for thermoforming receptacles (1) in a first transverse segment (B1) of the strip;
said installation being **characterized in that** it includes first cutting devices (16; 52, 30'A) for cutting out from the strip the containers (1) thermoformed in the first thermoforming station (14, 14'), a second thermoforming station (20, 20') disposed downstream from the first cutting devices and comprising at least one second transverse row of thermoforming devices (24, 26; 24', 26') analogous to the devices of the first station and for thermoforming containers (1) in a second transverse segment (B2) of the strip, which second segment is adjacent to the first segment (B1) and shares a transverse margin (R12) in common therewith, and second cutting devices (22; T2, 30'A) for cutting out from the strip the containers thermoformed in the second thermoforming station.

9. An installation according to claim 8, **characterized in that** the thermoforming devices (24, 26; 24', 26') of the second thermoforming station (20, 20') are offset transversely (Dt) to the strip relative to the thermoforming devices of the first station 14, 14').

10. An installation according to claim 9, **characterized in that** the transverse offset (Dt) between the thermoforming devices (24, 26; 24', 36') of the first and second rows (14, 14'; 20, 20') of devices, measured as the transverse component of the smallest center-to-center distance between a device of the first row and a device of the second row, is substantially equal to one half of the center-to-center distance (Et) between two adjacent thermoforming devices in the same row.

11. An installation according to any one of claims 8 to 10, **characterized in that** the heater means comprise a first heater station (12) disposed upstream from the first thermoforming station (14, 14') and a second heater station (18) disposed between the first and the second thermoforming stations (20, 20').

12. An installation according to any one of claims 8 to 11, **characterized in that** the first and/or second cutting devices (16, 22) are disposed downstream from the first and/or second thermoforming station (14, 20) respectively.

13. An installation according to any one of claims 8 to 11, **characterized in that** the first and/or second cutting devices (52; 30'A) are disposed in the first and/or second thermoforming station (14', 20') respectively.

14. An installation according to claim 13, **characterized in that**, for cutting out containers thermoformed in a thermoforming chamber (30), the first and/or the second cutting devices comprise a cutting tool (52) suitable for being moved in translation so as to co-operate with a backing tool (30'A) secured to or integral with the thermoforming chamber (30).

15. A production line for manufacturing, filling, and closing containers, said production line being **characterized in that**, for manufacturing the containers, it comprises at least one installation (11, 12) according to any one of claims 8 to 14, and **in that** it further comprises an installation (13) for filling and closing containers.

16. A production line according to claim 15, **characterized in that** it further comprises a buffer space (ZT) situated at the outlet of the thermoforming installation and transfer means for transferring the containers between the thermoforming installation (I1, IZ) and the buffer space, and between the buffer space and the installation (13) for filling and closing the containers.

## Patentansprüche

1. Verfahren zur Herstellung von Behältern durch Warmformen aus einem Band aus thermoplastischem Material (10), das im Schrittmodus angetrieben wird, bei dem das thermoplastische Material erhitzt wird, mindestens eine erste Querreihe (R1) von Behältern aus einem ersten Querstreifen (B1) des Bandes (10) warmgeformt wird und die warmgeformten Behälter (1) aus dem Band ausgeschnitten werden,
**dadurch gekennzeichnet, daß** nach dem Ausschneiden der Behälter (1) der mindestens einen ersten Querreihe (R1) aus dem Band (10) mindestens eine zweite Reihe von Behältern (R2) aus einem zweiten Querstreifen (B2) des Bandes, der an den ersten Streifen (B1) angrenzt warmgeformt wird, und aus dem Band die Behälter der mindestens einen zweiten Reihe ausgeschnitten werden, und daß der erste und der zweite Streifen (B1, B2) ein gemeinsames Querband (R12) haben.

2. Verfahren nach Anspruch 1, **dadurch gekennzeichnet, daß** die mindestens eine zweite Reihe (R2) von Behältern warmgeformt wird, wobei die Behälter der zweiten Reihe in Bezug zu jenen der ersten Reihe (R1) quer versetzt sind.

3. Verfahren nach Anspruch 2, **dadurch gekennzeichnet, daß** der Querversatz (Dt) zwischen den Behältern der ersten und der zweiten Reihe (R1, R2) im Wesentlichen gleich der Hälfte des Achsabstands (Et) zwischen zwei aneinander grenzenden Behältern einer selben Reihe ist.

4. Verfahren nach einem der Ansprüche 1 bis 3, **dadurch gekennzeichnet, daß** das thermoplastische Material (10) von zumindest dem zweiten Streifen (B2) erhitzt wird, nachdem aus dem Band die Behälter (1) der ersten Querreihe ausgeschnitten wurden, und bevor die zweite Behälterreihe warmgeformt wird.

5. Verfahren nach einem der Ansprüche 1 bis 4, **dadurch gekennzeichnet, daß** zumindest manche Behälter (1) aus dem Band (10) ausgeschnitten werden, bevor das Band nach dem Warmformen dieser Behälter vorwärts bewegt wird.

6. Verfahren nach einem der Ansprüche 1 bis 4, **dadurch gekennzeichnet, daß** nach dem Warmformen mindestens mancher Behälter (1) das Band (10) vorwärts bewegt wird und diese Behälter aus dem Band ausgeschnitten werden.

7. Verfahren zum Herstellen, Füllen und Verschließen von Behältern, **dadurch gekennzeichnet, daß** die Behälter (1) hergestellt werden, wobei das Verfahren nach einem der Ansprüche 1 bis 6 eingesetzt wird, und daß nach dem Ausschneiden der warmgeformten Behälter aus dem Band diese Behälter mit mindestens einem Produkt, insbesondere einem flüssigen und/oder pastenartigen Nahrungsmittel, gefüllt werden und diese Behälter verschlossen werden.

8. Anlage zur Herstellung von Behältern durch Warmformen, umfassend Mittel für den Antrieb eines Bandes aus thermoplastischem Material (10) im Schrittmodus, Mittel (12, 18) zur Erhitzung dieses Materials, Mittel zum Warmformen von Behältern und Mittel, um die warmgeformten Behälter aus dem Band auszuschneiden, wobei die Warmformungsmittel mindestens eine erste Warmformungsstation (14, 14') umfassen, die mindestens eine erste Querreihe von Warmformungsvorrichtungen (24, 26; 24', 26') aufweist, um Behälter (1) aus einem ersten Querstreifen (B1) des Bandes warmzuformen,
**dadurch gekennzeichnet, daß** sie erste Schneidvorrichtungen (16; 52, 30'A) zum Ausschneiden der in der ersten Warmformungsstation (14, 14') warmgeformten Behälter (1) aus dem Band, eine zweite Warmformungsstation (20, 20'), die stromabwärts zu den ersten Schneidvorrichtungen angeordnet ist und mindestens eine zweite Querreihe von Warmformungsvorrichtungen (24, 26; 24', 26') analog zu den Vorrichtungen der ersten Station zum Warmformen der Behälter (1) aus einem zweiten Querstreifen (B2) das Bandes, der an den ersten Streifen (B1) angrenzt und mit diesem letztgenannten ein gemeinsames Querband (R12) hat, und zweite Schneidvorrichtungen (22; T2, 30'A) umfaßt, um die in der zweiten Warmformungsstation warmgeformten Behälter aus dem Band auszuschneiden.

9. Anlage nach Anspruch 8, **dadurch gekennzeichnet, daß** die Warmformungsvorrichtungen (24, 26; 24', 26') der zweiten Warmformungsstation (20, 20') quer zum Band in Bezug zu den Warmformungsstationen der ersten Station (14, 14') versetzt sind (Dt).

10. Anlage nach Anspruch 9, **dadurch gekennzeichnet, daß** der Querversatz (Dt) zwischen den Warmformvorrichtungen (24, 26; 24', 36') der ersten und der zweiten Reihe (14, 14'; 20, 20') von Vorrichtungen, gemessen durch die Querkomponente mit dem kleinsten Achsabstand zwischen einer Vorrichtung der ersten Reihe und einer Vorrichtung der zweiten Reihe, im Wesentlichen gleich der Hälfte des Achsabstands (Et) zwischen zwei aneinandergrenzenden Warmformvorrichtungen einer selben Reihe ist.

11. Anlage nach einem der Ansprüche 8 bis 10, **dadurch gekennzeichnet, daß** die Erhitzungsmittel eine erste Heizstation (12), die stromaufwärts zu der ersten Warmformungsstation (14, 14') angeordnet ist, und eine zweite Heizstation (18), die zwischen der ersten und der zweiten Warmformungsstation (20, 20') angeordnet ist, umfassen.

12. Anlage nach einem der Ansprüche 8 bis 11, **dadurch gekennzeichnet, daß** die ersten und/oder die zweiten Schneidvorrichtungen (16, 22) jeweils stromabwärts zu der ersten und/oder der zweiten Warmformungsstation (14, 20) angeordnet sind.

13. Anlage nach einem der Ansprüche 8 bis 11, **dadurch gekennzeichnet, daß** die ersten und/oder die zweiten Schneidvorrichtungen (52; 30'A) jeweils in der ersten und/oder der zweiten Warmformungsvorrichtung (14', 20') angeordnet sind.

14. Anlage nach Anspruch 13, **dadurch gekennzeichnet, daß** die ersten und/oder die zweiten Schneidvorrichtungen zum Ausschneiden der n einer Warmformungskammer (30) warmgeformten Behälter ein Schneidwerkzeug (52) umfassen, das in Translation verschoben werden kann, um mit einem Gegenwerkzeug (30'A) zusammenzuwirken, das mit der Warmformungskammer (30) verbunden ist.

15. Kette zum Herstellen, Füllen und Verschließen von Behältern, **dadurch gekennzeichnet, daß** sie für die Herstellung der Behälter mindestens eine Anlage (I1, 12) nach einem der Ansprüche 8 bis 14 umfaßt, und daß sie ferner eine Anlage (13) zum Füllen und Verschließen von Behältern umfaßt.

16. Herstellungskette nach Anspruch 15, **dadurch gekennzeichnet, daß** sie einen Pufferraum (ZT), der am Ausgang der Warmformungsanlage angeordnet ist, und Mittel zur Weiterleitung der Behälter zwischen der Warmformungsanlage (I1, IZ) und dem Pufferraum und zwischen dem Pufferraum und der Anlage zum Füllen und Verschließen der Behälter (I3) umfaßt.
